# EUROPEAN PATENT APPLICATION

(11) **EP 1 990 071 A1**
(43) Date of publication of application: **12.11.2008**
(21) Application number: 06757230.5
(22) Date of filing: 09.06.2006
(51) Int. Cl.: A62B 18/02

(54) **MULTILAYERED MASK**

(30) Priority: 01.03.2006 JP 2006054647
(71) Applicant: Makino, Chosei, Umimachi Kasuya-gun Fukuoka 811-2107 (JP)
(72) Inventor: HAYASI, Jun, Fukuoka-shi, Fukuoka 814-0015 (JP)
(74) Representative: HOFFMANN EITLE
(86) International application number: PCT/JP2006/311657
(87) International publication number: WO 2007/099655

(57) **Abstract**

The present invention provides a multilayered mask which can be manufactured at a low cost, possesses excellent fitting property on a curved surface of a face during wearing, can save a space when the mask is not used, and can prevent the intrusion of viruses into a human body by surely blocking viruses. In a multilayered mask which is constituted by stacking a plurality of mask sheets, at least an outermost-layer of the multilayered mask is formed of PPSB (polypropylene-span-bond) nonwoven fabric, the multilayered mask includes a mask body which is formed into a cup shape and has a tapered distal end, and a proximal portion of the mask body is opened to form a face contact portion capable of covering a mouth and a nose, and a fixing string extends between both ends of the face contact portion.

## Description

### Technical Field

The present invention relates to a multilayered mask.

### Background Art

Conventionally, masks have been used to prevent people from being infected with viruses such as influenza viruses or the like which spread by aerial infection or droplet infection at a place which is crowded with people.

In recent years, people are exposed to a threat of new viruses such as bird influenza viruses or the like. Further, since there is an enough chance that unknown viruses will be discovered in future, fears that people feel for strongly infectious viruses are steadily increased these days.

Accordingly, a demand for a high-performance mask which can exhibit high virus blocking performance and high virus collecting performance even though the viruses are strongly infectious is increasing and various kinds of masks have been proposed.

For example, there has been proposed a mask having the constitution in which the mask is formed in the multilayered structure consisting of an optical catalyst layer and a carbon fiber layer. Here, the optical catalyst layer sterilizes viruses when the viruses pass through the mask and, at the same time, the carbon fiber layer absorbs the viruses thus preventing the intrusion of the viruses into a human body. (see patent document 1, for example) Further, there has been also proposed a mask in which the mask is constituted of a cup-shaped cover portion which covers a mouth and a periphery of a nostril, a sheet cup which is adhered to the inside of the cover portion, and ear hook portions which are contiguously connected with both of the right and left ends of the cover portion thus forming a covering portion having a stereoscopic shape which fits the undulation of a surface of a user's face. Due to such a constitution, a gap between the mask and the surface of the user's face can be reduced as much as possible thus preventing the intrusion of the viruses through the gap. (see patent document 2, for example)
[Patent document 1] Japanese Patent Laid-open 2000-197711
[Patent document 2] Japanese Patent Laid-open 2005-328937

### Disclosure of the Invention

### Task to be solved by the Invention

However, with respect to the above-mentioned mask described in patent document 1, the mask intends to achieve high performances by sterilizing viruses which pass through the mask using the optical catalyst layer and, at the same time, by absorbing the viruses using the carbon fiber layer. Since the mask is formed of the optical catalyst layer, the carbon fiber layer and the like, even though the mask is formed of only two layers, the increase of the manufacturing cost is unavoidable. Further, the covering bodywhich covers a mouth and a periphery of a nostril is hardly fitted to a curved surface of a user's face and hence, a gap is formed between the mask and the surface of the face thus giving rise to a drawback that the viruses intrude through the gap.

Further, in the above-mentioned mask described in patent document 2, although a gap between the mask and the surface of the face is reduced as much as possible by forming the mask in a stereoscopic shape to conform to the curved surface of the face, the manufacture of the stereoscopic-shaped mask is cumbersome and hence, the increase of a manufacturing cost is also unavoidable. Further, the mask also has following drawbacks. That is, the mask requires a considerable space at the time of storing or placing the mask because of the stereoscopic shape thereof , or when the mask is carried in a folded state or when the mask is collapsed due to an external force, wrinkles are formed by folding and the mask hardly restores an original shape thus requiring the user's utmost care in handling the mask.

In this manner, in such an attempt to achieve the high performance, the conventional mask becomes expensive and the handling thereof becomes cumbersome. On the other hand, to prevent the spreading of viruses, there has been a strong demand for a mask which any inhabitant living in a country or a region where the spread of the viruses is confirmed and countries or regions which are close to the virus-affected country or region can easily acquire without any economical burden or is inexpensive to the degree that a country or a local government can distribute the mask to the inhabitant at no charge and also exhibits the high performances.

The present invention has been made under such circumstances and it is an object of the present invention to provide a highly-functional mask which can be manufactured at a low cost and yet can be favorably fitted on a curved surface of a user's face when the user wears the mask and can be stored with a least storing space when the user does not wear the mask, and can surely block viruses thus preventing the intrusion of the viruses into a human body.

### Means for solving the Tasks

According to the present invention described in claim 1, a multilayered mask is constituted by stacking a plurality of mask sheets, wherein at least an outermost-layer of the multilayered mask is formed of PPSB (polypropylene-span-bond) nonwoven fabric, the multilayered mask includes a mask body which is formed into a cup shape and has a tapered distal end, and a proximal portion of the mask body is opened to form a face contact portion capable of covering a mouth and a nose, and fixing strings extend between both ends of the face contact portion.

Further, according to the present invention described in claim 2, in a multilayered mask described in claim 1, in the plurality of layers of mask sheets, an outermost-layer mask sheet and an innermost-layer mask sheet are formed of a PPSB (polypropylene-span-bond) nonwoven mask sheet, and an intermediate-layer mask sheet is formed of an MB (melt-blown) nonwoven mask sheet.

Further, according to the present invention described in claim 3, in a multilayered mask described in claim 2, the intermediate-layer mask sheet is formed of a plurality of MB (melt blown) nonwoven mask sheets having mesh sizes which are different from each other.

Further, according to the present invention described in claim 4, in a multilayered mask described in any one of claims 1 to 3, the mask body is formed in a cup shape by seaming or welding left and right side peripheries of two upper and lower approximately mountain-shaped sheets which are formed by folding back the mask body, a proximal portion of the cup shape formed of the fold-back approximately mountain-shaped sheets is opened to form the face contact portion, and the fixing string is fixed to left and right ends of the face contact portion.

Further, according to the present invention described in claim 5 , in a multilayered mask described in any one of claims 1 to 4, a strip-like metal foil which is deformable in conformity with a shape that a user desires is mounted on any one of layers of the mask sheets.

Further, according to the present invention described in claim 6, in a multilayered mask described in any one of claims 1 to 5, a strip-like cushion member which comes into contact with a nose of a user is mounted on an inner surface of the innermost-layer mask sheet of the mask sheet.

### Advantageous Effect of the Invention

In the present invention described in claim 1, a multilayered mask which is constituted by stacking a plurality of mask sheets, wherein at least an outermost-layer of the multilayered mask is formed of PPSB (polypropylene-span-bond) nonwoven fabric, the multilayered mask includes a mask body which is formed into a cup shape and has a tapered distal end, and a proximal portion of the mask body is opened to form a face contact portion capable of covering a mouth and a nose, and a fixing string extends between both ends of the face contact portion.
Accordingly, the mask body constituted in a multilayered structure can surely block or collect viruses thus preventing the viruses from intruding and reaching the mouth. Further, since the mask body is formed in a cup-shaped stereoscopic shape which projects frontwardly from the mouth when the user wears the mask, a proper space which facilitates breathing or talking is ensured in front of the mouth. Further, the proximal portion fits the curved surface of the face due to the stereoscopic shape thereof thus preventing the formation of a gap between the mask and the face body and the intrusion of the viruses through the gap. Further, the PPSB nonwoven fabric is a high-strength nonwoven fabric which exhibits improved wear resistance, improved chemical resistance and other improved properties. By positioning the PPSB nonwoven fabric mask sheet which is formed of the PPSB nonwoven fabric at the outermost layer, it is possible to produce the high-strength multilayered mask. Further, by providing the water repellency to the PPSB nonwoven fabric mask sheet, it is possible to efficiently prevent the intrusion of the viruses by scattering droplets.

In the present invention described in claim 2, in the above-mentioned plurality of mask sheets, the outermost-layer mask sheet and the innermost-layer mask sheet are formed of the PPBS (polypropylene span bond) nonwoven fabric mask sheet, and the intermediate-layer mask sheet is formed of the MB (melt-blown) nonwoven fabric mask sheet. Accordingly, by differentiating the characteristic of polypropylene which becomes the material of PPSB nonwoven fabric between the outermost layer and the innermost layer, it is possible to form the respective layers using the optimum PPSB nonwoven fabrics. That is, by using polypropylene having high water repellency as a material of the PPSB nonwoven fabric which is positioned at the outermost layer and polypropylene having water absorbing property of a modified material as a material of the PPSB nonwoven fabric which is positioned at the innermost layer respectively, it is possible to block droplets or the like scattered to the outermost layer thus preventing the intrusion of viruses which are contained in the droplets, while the innermost layer can prevent a phenomenon that the multilayer absorbs moisture and lowers a function of the mask by absorbing moisture discharged from a mouth. Further, since polypropylene is a low-price material, the mul til aye red mask of the present invention can be manufactured at a low cost. Further, the MB nonwoven fabric which is positioned at the intermediate layer is formed of a nonwoven fabric made of extremely ultra-fine fibers, it is possible to surely collect viruses with ultra-fine meshes of fibers.

In the present invention described in claim 3, the intermediate-layer mask sheet is formed of the plurality of MB nonwoven fabric mask sheets having mesh sizes which are different from each other. Accordingly, even when some viruses cannot be collected by a first layer of the intermediate-layer, the viruses can be surely collected by a second layer or subsequent layer of the intermediate-layer thus surely preventing the viruses from reaching the mouth.

In the present invention described in claim 4, the mask body is formed in a cup shape by seaming or welding left and right side peripheries of two upper and lower approximately mountain-shaped sheets which are formed by folding back the mask body, the cup-shaped proximal portion of the fold-back approximately mountain-shaped sheets is opened to form the face contact portion, and the fixing strings extendbetween left and right ends of the face contact portion. Accordingly, when the user wears the mask, the mask body is formed in a stereoscopic shape which projects frontwardly from a mouth for facilitating breathing or talking. Further, when the mask is not used, it is possible to overlap two upper and lower approximately mountain-shaped sheets and hence, the mask can be folded into a substantially thin flat shape thus facilitating the carrying and storing of the mask while requiring a least storing space. Further, the face contact portion can fit the curved surface of the user's face thus preventing the formation of a gap between the mask body and the face body and the intrusion of the viruses through the gap.

In the present invention described in claim 5, a strip-like metal foil which is deformable to a shape that a user desires is mounted on any one of the mask sheets. Accordingly, the metal foil can be formed in a shape which fits the undulation around the nose of the user, and, in a mask wearing state, a covering body can be made into close contact with a curved surface of the face as much as possible thus preventing the intrusion of the viruses through the gap.

In the present invention described in claim 6, a strip-like cushion member which comes into contact with the nose of the user is mounted on the inner surface of the innermost layer of the mask sheet. Accordingly, the cushion member is positioned at a position where the mask body and the nose are brought into contact with each other and hence, the cushion member can fit the nose contact portion thus improving a wearing feeling. Further, by bringing the mask body into further close contact with the undulation of the peripheryof the nose, it is possible to prevent the formation of a gap between the mask body and the face and the intrusion of the viruses through the gap.

### Best Mode for Carrying Out the Invention

Amultilayeredmask according to the present invention is a multilayered mask which is constituted by stacking a plurality of mask sheets, wherein at least an outermost-layer of the multilayered mask is formed of PPSB (polypropylene-span-bond) nonwoven fabric, the multilayered mask includes a mask body which is formed into a cup shape and has a tapered distal end, and a proximal portion of the mask body is opened to form a face contact portion capable of covering a mouth and a nose, and a fixing string extends between both ends of the face contact portion.

That is, by constituting the mask body in the multilayered structure, efficiency in collecting viruses or the like is improved thus surely preventing the viruses or the like from reaching the mouth, and the mask body can be formed in a cup-shaped stereoscopic shape which projects frontwardly from the mouth when a user wears the mask and fits the curved surface of the face. In a conventional general planar and rectangular mask, a mask body comes into contact with a user's mouth thus impeding talking or breathing. Further, when a user is a female user, there arises a drawback that the mask body comes into contact with a makeup such as rouge thus removing the makeup due to such a contact. As described above, since the multilayered mask according to the present invention projects frontwardly from the mouth when the user wears the mask and hence, a space is formed between the mask body and the mouth. Accordingly, the user can easily talk and breathe and, at the same time, it is unnecessary for the female user to fear the possibility of removal of the makeup such as the rouge.

Further, the PPSB nonwoven fabric is a high-strength nonwoven fabric which has improved wear resistance and chemical resistance and the like. By positioning the PPSB nonwoven fabric mask sheet formed of such a PPSB nonwoven fabric at the outermost layer, a high-strength multilayered mask can be formed. By using polypropylene having a high-water-repellency as a raw material, the mask can enhance the water repellency of the mask sheet, wherein the outermost layer of the mask can effectively block a biological fluid such as saliva when the biological fluid is scattered to the outermost layer thus effectively preventing the intrusion of the viruses attributed to the scattering of droplets.

Further, this embodiment is characterized in that the outermost-layer mask sheet and innermost-layer mask sheet are formed of a PPSB (polypropylene span bond) nonwoven fabric mask sheet, while the intermediate-layer mask sheet is formed of a MB (melt-blown) nonwoven fabric mask sheet.

That is, by properly differentiating the property of polypropylene which becomes a raw material of the PPSB nonwoven fabric between the outermost-layer mask sheet and the innermost-layer mask sheet, it is possible to form the outermost-layer mask sheet and the innermost-layer mask sheet using the PPSB nonwoven fabrics which conform to the property of the respective mask sheets. That is, by using polypropylene having high water repellency as a material of the PPSB nonwoven fabric which is positioned at the outermost layer and polypropylene having water absorbing property of a modified material as a material of the PPSB nonwoven fabric which is positioned at the innermost layer, the outermost layer can block droplets or the like scattered to the outermost layer thus preventing the intrusion of viruses which are contained in the droplets, while the innermost layer can absorb moisture discharged from the mouth thus preventing the multilayer from containing moisture and lowering a function of the mask. Further, since polypropylene is a low-price material, the multilayered mask of the present invention can be manufactured at a low cost.

Further, by positioning the nonwoven fabric mask sheet formed of the PPSB which is the high-strength nonwoven fabric having improved wear resistance, chemical resistance or the like at the outermost layer and the innermost layer, it is possible to impart a strength to the mask body. The MB nonwoven fabric mask sheet which is positioned at the intermediate layer is formed of a nonwoven fabric made of extremely ultra-fine fibers having a minimum fiber diameter of approximately 1µm and hence, the intermediate layer mask sheet functions as a filter and can surely collect the viruses.

Further, by forming the intermediate-layer MB nonwoven fabric using a plurality of MB nonwoven fabric mask sheets having mesh sizes which are different from each other, even when some viruses pass through a first intermediate layer, the viruses can be surely collected by a second layer or subsequent layer thus surely preventing the viruses from reaching the mouth.

Further, the present invention is characterized in that the mask body is formed in a cup shape by seaming or welding left and right side peripheries of two upper and lower approximately mountain-shaped sheets which are formed by folding back the mask body, the cup-shaped proximal portions of the fold-back approximately mountain-shaped sheets are opened to form the face contact portion, and the fixing string extends between left and right ends of the face contact portion.

That is, the mask body is basically constituted of two upper and lower approximately mountain-shaped sheets which are formed by folding back the mask body, and is formed into a cup shape by seaming both side peripheries thereof and hence, at the time of carrying or storing the mask, it is possible to form the mask in a planar storing shape by overlapping two approximately mountain-shaped sheets using a fold-back portion and the seam portions of both left and right side peripheries as folding lines, while when the mask is used, the mask body is formed in a cup shape as a whole by opening the approximately mountain-shaped sheets which are overlapped in plane from the opening portion using the fold-back portion and the both left and right side peripheries as the center so as to form the mask into a shape which has an approximate distal end thereof sharpened thus allowing the mask to easily cover the mouse and nose.

Accordingly, when the user wears the mask, a proper space is formed between the mask body and the mouth and hence, the user can easily breathe and talk and, at the same time, when the user is a female user, it is unnecessary for her to fear the possibility that the mask body comes into contact with the rouge or the like and the makeup is removed. Further, even when wrinkles or the like attributed to folding are formed on the multilayered mask according to the present invention by folding the mask when the mask is not used such as at the time of carrying or storing the mask, there arises no problem in forming the mask body in a stereoscopic shape whereby the careful handling of the mask is unnecessary.

Since the mask body is formed in the above-mentioned shape, when the mask body is fixed to the face of the user by engaging the fixing strings with the back of the head of the user, the strings pull both ends of the opening portion of the mask body rearwardly, that is, in the face direction. Accordingly, since the mask body per se is formed by overlapping the approximately mountain-like sheets in a fold-back state, a tensile stress is inevitably applied to the opening portion, that is, both end portions of bottom sides of the approximately mountain-like sheets whereby the sheets are deviated in the center direction. Inevitably, the approximately mountain-like sheets which are overlapped or expanded further increase a width of the opening above the opening portion and hence, the size of the mask is more than enough to cover peripheries of the mouth and nose and, at the same time, can be brought into close contact with and fixed to the face in a state that the mask fits the curved surface of the face.

Further, this embodiment is characterized in that a strip-like metal foil which is deformable to a shape that a user desires is mounted on any one of the mask sheets.

That is, the metal foil can be formed in a shape which fits the undulation around the nose of the user who wears the mask, and, when the user wears the mask, a covering body can be made into close contact with the curved surface of the face as much as possible thus preventing the intrusion of the viruses through the gap.

This embodiment is characterized in that a strip-like cushion member which comes into contact with the nose of the user is mounted on an inner surface of the innermost layer mask sheet. That is, the cushion member is positioned at a position where the mask body and the nose are brought into contact with each other and hence, the cushion member can fit the nose contact portion thus improving a wearing feeling. Further, by bringing the mask body into further close contact with the undulation of the periphery of the nose, it is possible to prevent the formation of a gap between the mask body and face and the intrusion of the viruses through the gap.

Hereinafter, an embodiment of the multilayered mask according to the present invention is explained in conjunction with drawings.

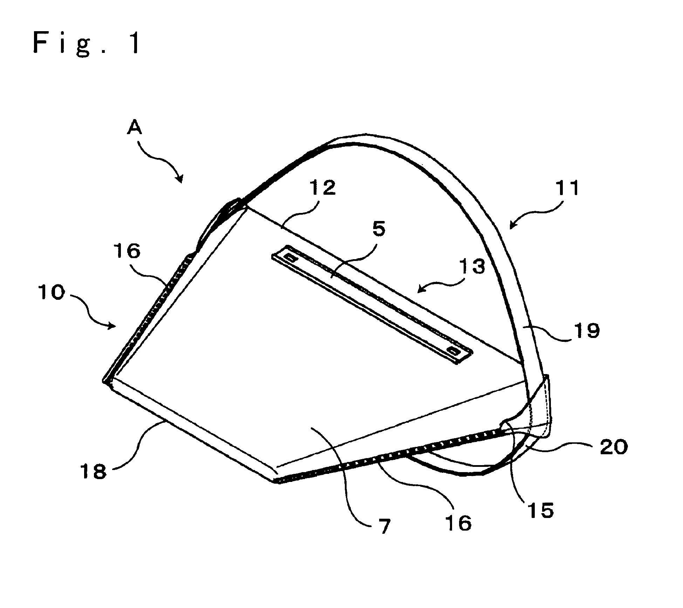

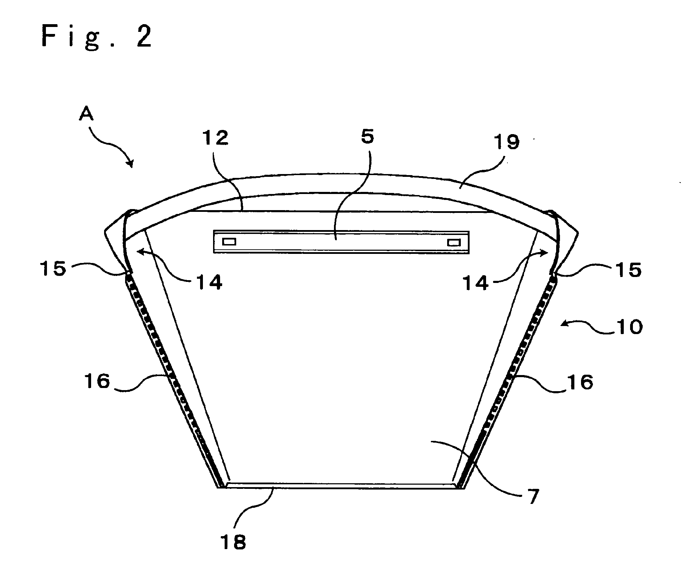

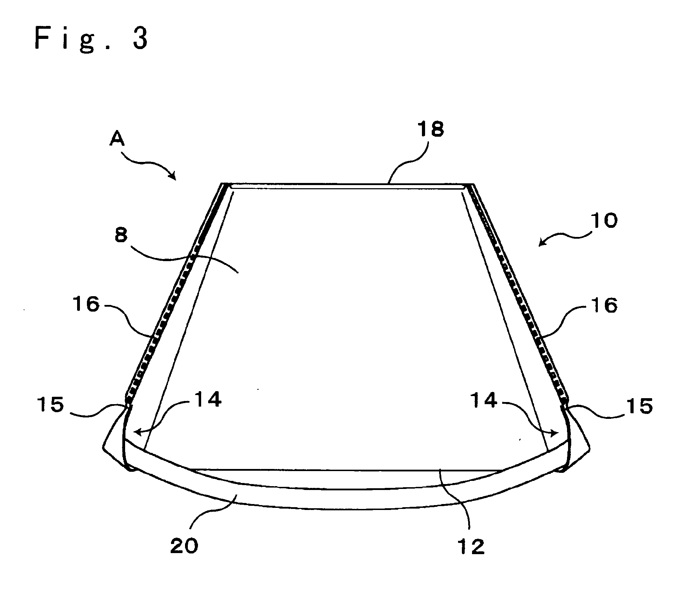

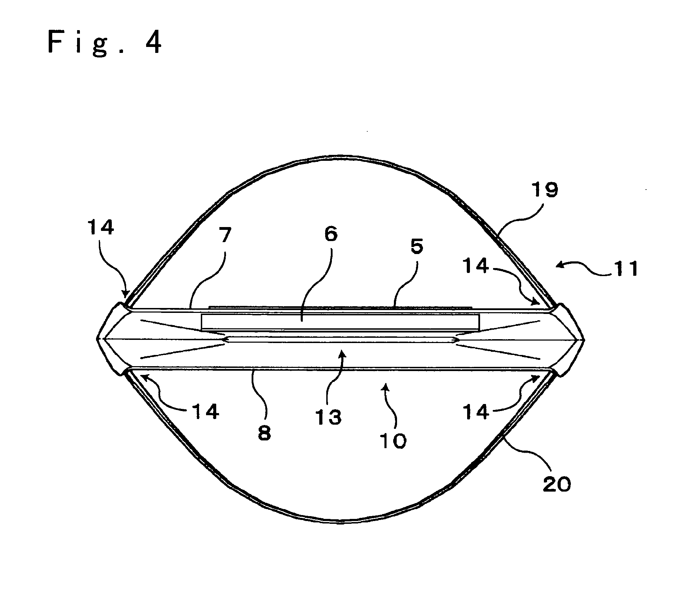

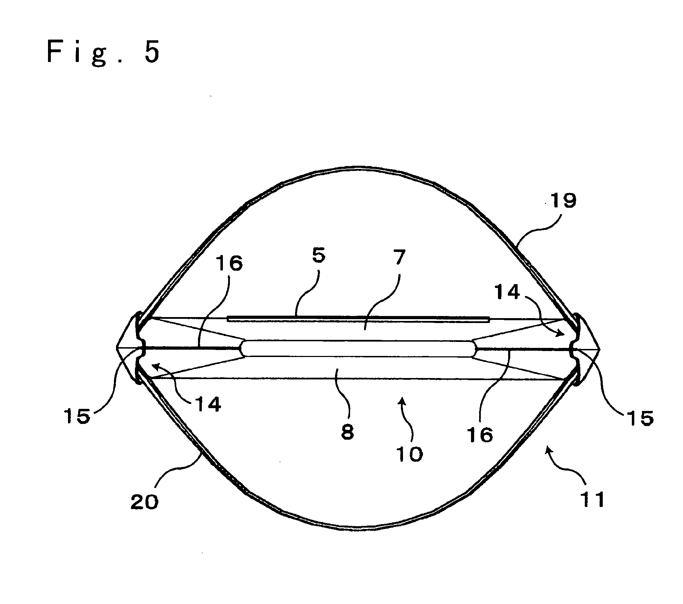

As shown in Fig. 1 to Fig. 6, the multilayered mask A of this embodiment is constituted of a bag-like mask body 10 which is formed of two opposing approximately mountain-like sheet bodies, and face fixing strings 11 which are mounted on corner portions of a proximal portion 12 of the mask body 10.

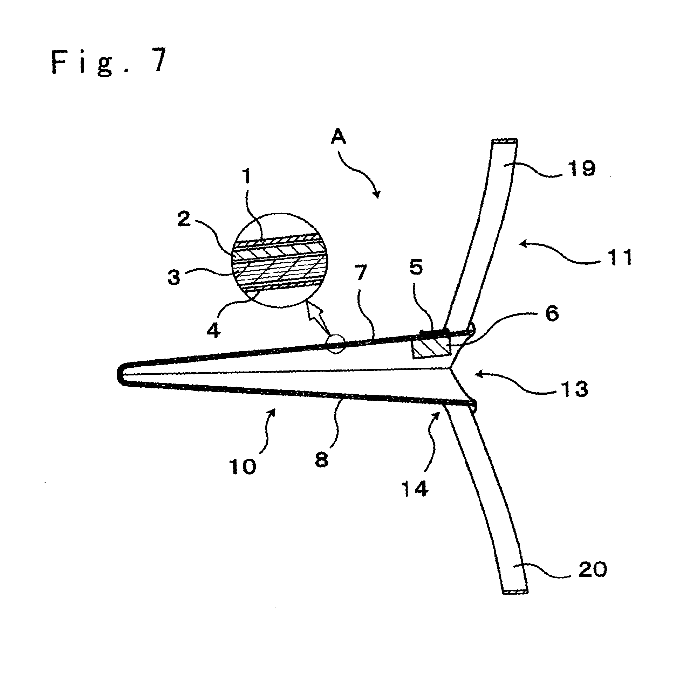

The mask body 10 has the four-layered constitution by stacking first to fourth mask sheets 1 to 4 as shown in Fig. 7.

Here, the first to fourth mask sheets 1 to 4 are respectively formed by blanking nonwoven fabrics having different properties as described later into a shape in which approximately mountain-like shapes are positioned in a vertical symmetry with respect to short bottom sides which constitute an axis of symmetry and a center portion is narrowed thus forming the first to fourth mask sheets 1 to 4 in a hour-glass shape. By stacking the respective blanked mask sheets 1 to 4 in a state that a first mask sheet 1 constitutes an outermost layer, a second mask sheet 2 is arranged inside the first mask sheet 1, the third mask sheet 3 is arranged inside the second mask sheet 2, and the fourth mask sheet 4 is arranged inside the third mask sheet 3 as an innermost layer, the mask body 10 having the four layered structure is constituted. Then, the four-layered mask sheets are folded back with respect to an axis of symmetry 18 thus overlapping the upper and lower mountain-like portions, and both side peripheries 16, 16 are adhered to each other by welding or the like whereby the mask body 10 is formed into the bag shape in which the approximately mountain-like stacked sheet bodies 7, 8 face each other.

Here, the mask sheets 1 to 4 are integrated by welding four layers of the stacked mask sheets 1 to 4 on the axis of symmetry 18 of the mask sheets 1 to 4 and, thereafter, the mask sheets 1 to 4 are foldedback and both side peripheries 16, 16 are welded or the like. Accordingly, it is possible to form the mask body 10 in a bag shape without generating slackening or twisting.

In forming the mask body 10, it is sufficient to blank the first to fourth mask sheets 1 to 4 using dedicated dies and, thereafter, to stack and weld these mask sheets 1 to 4 and hence, it is unnecessary to form the mask sheet in a stereoscopic shape during manufacturing steps different from a stereoscopically molded mask whereby it is possible to manufacture the mask at a low cost without spending time and efforts in the manufacturing operation.

The first mask sheet 1 is formed of a nonwoven fabric having water repellency and is preferably formed of a PPSB (Polypropylene Spun Bonded) nonwoven fabric particularly.

The PPSB nonwoven fabric is a high-strength nonwoven fabric which uses polypropylene as a rawmaterial and exhibits improved wear resistance, the improved water resistance and the improved chemical resistance. Further, since the first mask sheet uses polypropylene having water repellency as the raw material, the first mask sheet is formed of the nonwoven fabric having the high water repellent property. Further, the first mask sheet is formed into a sheet by directly spinning the raw material using a spun bond method and hence, the productivity is excellent and a manufacturing cost is low. Further, the PPSB nonwoven fabric is formed of elongated continuous fibers and hence, in general, it is possible to increase a strength thereof compared to strength of short-fiber nonwoven fabric.

With the use of the PPSB nonwoven fabric having such property in the first mask sheet which is positioned at the outermost layer, even when droplets such as saliva, body fluid or blood are scattered to the first mask sheet, it is possible to prevent the droplets from infiltrating into the inner layer thus preventing the intrusion of viruses contained in the droplets.

The second mask sheet 2 is formed of a medical antibiotic nonwoven fabric made of fibers finer than the fibers of the first mask sheet 1, and it is particularly preferable that the second mask sheet 2 is formed of a MB (Melt Blown) nonwoven fabric. The melt blown nonwoven fabric is formed using ultra-fine fibers of 1 to 3µm by a melt blown method and can be constituted as a filter. Accordingly, even when some viruses pass through the first layer, these viruses can be surely collected by meshes of these ultra-fine fibers. Further, it is preferable that by making a thickness of the second mask sheet 2 slightly larger than a thickness of the above-mentioned first mask sheet 1, the virus collecting effect can be enhanced.

The third mask sheet 3 is formed of a nonwoven fabric having charging property and it is particularly preferable that the third mask sheet 3 is formed of the MB nonwoven fabric in the same manner as the second mask sheet 2. Further, by forming the third mask sheet 3 using a nonwoven fabric which uses polyester as a raw material, for example, it is possible to favorably charge static electricity to the third mask sheet 3 and hence, even when some viruses pass through the second layer, these viruses are effectively absorbed into a surface of the third mask sheet 3 thus enabling of the collection of the viruses. Accordingly, it is possible to constitute intermediate layers formed of the second and third mask sheets 2, 3 in a filter shape and hence, it is possible to effectively prevent mainly the passing of floating pathogenic germs or the like. The third mask sheet 3 is formed of the nonwoven fabric having meshes relatively finer than the meshes of the second mask sheet 2 thus forming the intermediate layer using the nonwoven fabrics which have different mash sizes whereby the collecting efficiency is enhanced. In addition, by making a thickness of the third mask sheet 3 slightly larger than a thickness of the second mask sheet 2, it is possible to preferably charge the third layer.

The fourth mask sheet 4 is formed of the PPSB nonwoven fabric in the same manner as the first layer. The fourth mask sheet 4 uses the improved polypropylene having water absorbing property as a raw material and hence, it is possible to form the fourth mask sheet 4 into the nonwoven fabric having the high water absorbing property and the high diffusion property and hence, the fourth mask sheet 4 absorbs moisture discharged from the mouth of a user whereby it is possible to prevent the lowering of functions of the mask attributed to a phenomenon that the multilayers contain moisture.

As described above, according to the constitution which stacks the first to fourth mask sheets, first of all, the first mask sheet 1 absorbs most of the viruses and hence, a virus absorption quantity on the layer side which is inner than the first mask sheet 1 is decreased, and the viruses are completely blocked by the second mask sheet 2. Further, even when there exist some viruses which pass through the respective mask sheets 1, 2 by a chance, such viruses are surely blocked by the third mask sheet 3 which is charged with static electricity. Further, moisture which is discharged from the mouth of the user is absorbed by the fourth mask sheet 4 thus preventing the lowering of the function of other layers.

Here, the order of stacking the first to fourth mask sheets is not limited to the above-mentioned order. However, by constituting the mask body 10 by stacking the first to fourth mask sheets 1 to 4 in the above-mentioned order particularly, it is preferable that the first to fourth mask sheets 1 to 4 can exhibit the maximum advantageous effects thereof respectively by making use of the respective functions thereof.

Further, in the mask body 10, on an outer surface of at least one side portion of the first mask sheet 1 which is positioned at the outermost layer, a strip-like metal foil 5 which extends in the lateral direction along the proximal portion 12 is mounted. Here, in this embodiment, the metal foil 5 is mounted on an outer surface of the first stacked sheet body 7.

The metal foil 5 is positioned at a nose portion of a user H when the user H wears the multilayered mask A. The metal foil 5 is formed of a resilient material and is deformable into a shape which the user H desires. Accordingly, along with the deformation of the metal foil 5, it is possible to deform the shape of the mask body 10 into the shape which the user H desires, for example, along a profile of a face of the user H, particularly, undulation of the nose of the user H.

A gap which is formed between the mask and a surface of the user's face is particularly liable to be formed around the nose. By deforming the metal foil 5 along the profile of the face of the user H at the time of wearing the multilayered mask A, the user H can wear the multilayered mask A in a state that the mask body 10 is brought into close contact with the face of the user H and hence, it is possible to prevent the intrusion of the viruses through the gap.

Further, in the mask body 10, a strip-like cushion member 6 which extends in the lateral direction along the proximal portion 12 and has a size substantially equal to the metal foil 5 is mounted on an inner surface of a side portion of the fourth mask sheet 4 which is positioned at the innermost layer on which the metal foil 5 is mounted and at a position where the cushion member 6 is substantially overlapped to the metal foil 5. Here, in this embodiment, the cushion member 6 is mounted on an inner surface of the first stacked sheet body 7 on which the metal foil 5 is mounted.

The cushion member 6 is formed of a urethane material or the like having a thickness of approximately 2 to 5mm, for example, and constitutes a member which is brought into contact with the nose of the user H when the user H wears the multilayered mask A.

There has been also conventionally proposed a mask which mounts a metal foil thereon for allowing the mask to fit a profile of the face. However, even when the metal foil has resiliency, the metal foil is basically formed of metal and hence, has a certain degree of hardness. Accordingly, depending on a case, a user may feel pain on his/her nose. According to the multilayered mask A of this embodiment, with the use of the cushion member 6 as a buffer member, when the user wears the multilayered mask A, it is possible to prevent the user H from having a discomfort or feeling pain on his/her nose thus enhancing wearing feeling by providing a soft contact between the mask and the nose.

By allowing the selection of low-repulsive urethane and high-repulsive urethane as a material of the cushion member 6 in conformity with a taste of the user, it is possible to allow each user to obtain optimum fit feeling of the mask body on the nose.

Further, due to the cushion property of the cushion member 6, it is possible to bring the mask body 10 and the surface of the face into close contact with each other thus preventing the intrusion of viruses or the like attributed to the formation of the gap.

Although the metal foil 5 is mounted on the outer surface of the first mask sheet 1 which constitutes the outermost layer in this embodiment, the metal foil 5 may be mounted in the inside of the layer. That is, provided that the metal foil 5 is positioned at the nose portion by way of the cushion member 6 when the user wears the mask, the mounting of the metal foil 5 is not limited to the case described in this embodiment.

Corner portions at both left and right ends of an opening portion 13 of the mask body 10, that is, left and right corner portions of long bottom sides of the approximately mountain-like sheets are folded outwardly and distal end portions 15 of the corner portions are fixedly mounted on the mask body 10, and the fixing strings 11 are inserted into respective insertion space portions 14, 14 which are formed on both fold-back portions.

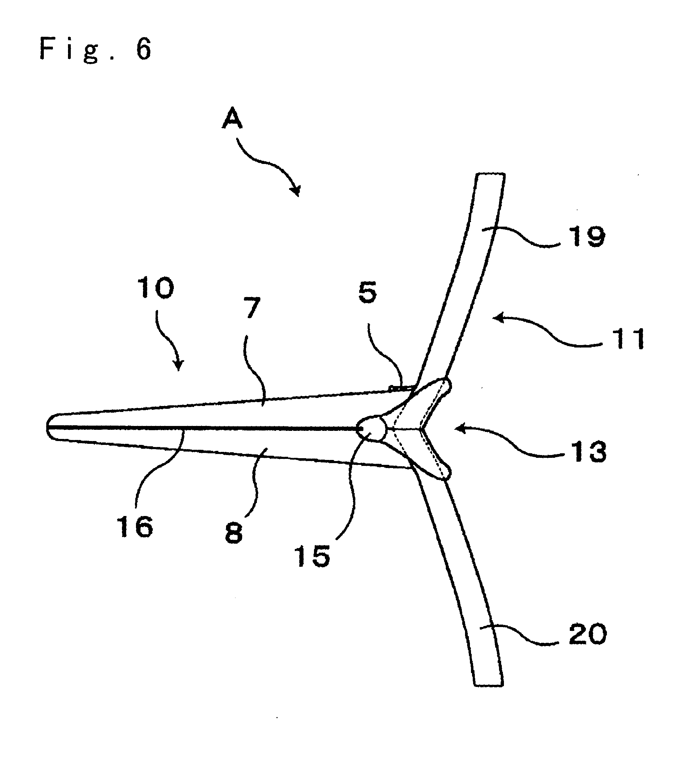

In this case, the strings 11 which are inserted into the insertion space portions 14, 14 are, since a fold-back portions of the corner portions form an approximately an isosceles triangular shape as shown in Fig. 6, respectively pulled out from two left and right sides of this triangular shape. Accordingly, the string which is pulled out from two left and right sides of the fold-back portion is pulled out rearwardly in a state that the string is bifurcated in the upward oblique direction and the downward oblique direction along two left and right inclined sides with a bottom side of the approximately isosceles triangular shape therebetween. Here, a string portion which is pulled out to the first stacked sheet body 7 side on which the metal foil 5 and the cushion member 6 are mounted constitutes an upper string 19 and a string portion which is pulled out to the second stacked sheet body 8 side constitutes a lower string 20.

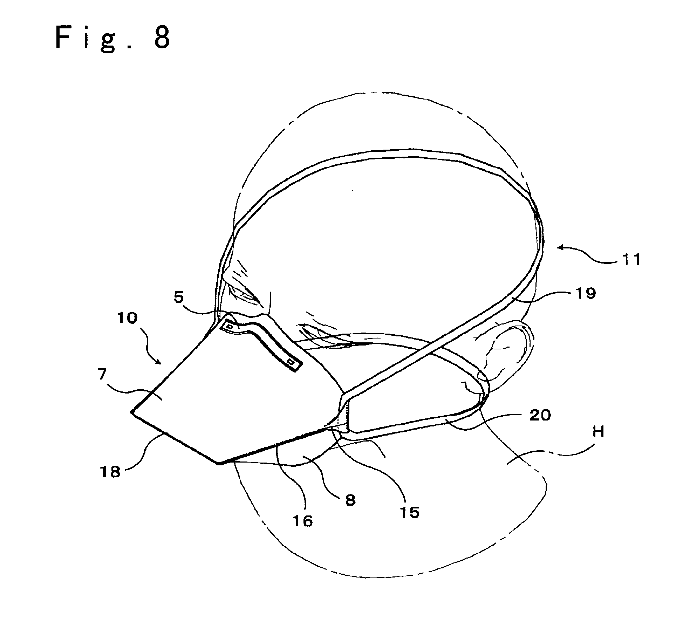

With respect to the fixing string 11, as shown in Fig. 8, in wearing the mask, by engaging the upper string 19 which is bifurcated in the upward oblique direction with an upper portion of the back of the head of the user and by engaging the lower string 20 which is bifurcated in the downward oblique direction with a lower portion of the back of the head, it is possible to further easily open the opening portion of the mask body vertically and to fix the mask body to the face in a stable manner.

That is, the upper and lower strings 19, 20 which are equally pulled out in the upward and downward oblique directions are bifurcated from both side ends of the mask body 10 in the upward oblique direction and in the lower oblique direction, and at the back of the head, are engaged with the back of the head in a spaced apart manner in the vertical direction. Accordingly, it is possible to prevent an unprecedented state that the upper and lower strings 19, 20 are gathered to one portion thus damaging the stable mounting of the mask body 10 on the face.

Further, since the mask body 10 is formed in the above-mentioned shape, when the mask body 10 is fixed to the face by engaging the fixing string 11 with the back of the head in the above-mentioned manner, the strings 11 pull both ends of the opening portion 13 of the mask body 10 in the rearward direction (face direction). Accordingly, a tensile stress is inevitably applied to the opening portion 13, that is, both end portions of the long bottom side of the approximately mountain- like sheets and hence, the sheets are displaced in the center direction whereby the stacked mountain-like sheets can further increase the opening width of the opening portion 13. Accordingly, the size of the mask body 10 is more than enough to cover the peripheries of the mouth and nose and, at the same time, it is possible to closely fix the mask body 10 on the face in a state that the mask body 10 fits the curved surface of the face.

By adopting the multilayered mask A having the above-mentioned constitution, it is possible to provide the highly functional multilayeredmask and hence, it is possible to prevent the intrusion of viruses by bringing the multilayered mask into close contact with the surface of the face and by eliminating the formation of the gap. Further, by constituting the mask sheets which possess the respective functions in the stacking order which allows the mask sheets to respectively exhibit the maximum advantageous effects, it is possible to surely block and collect the viruses.

Further, according to the above-mentioned constitution, it is possible to form the multilayered mask A according to this embodiment into a multilayered mask which also exhibits excellent blood impermeability.

Table 1 shown below indicates a result of measurement of an experiment performed with respect to blood permeability of the multilayered mask A according to this embodiment. Here, an aqueous solution of concentration of 12 to 20mg/m³ which contains Nacl fine particles having a particle size of 0.076µm is used as a substitute for blood, and the blood permeability is measured at a flow rate of 32L per minute. As shown in Table 1, it is understood that the multilayered mask of the present invention exhibits the excellent blood impermeability and it is possible to provide the highly functional mask having a high blocking rate of 99.82 to 99.86%.

**[Table 1]**

| Measuring object | Number of layers | Measuring method | Blood permeability | F Flow rate | R Rejection | P Permeability | Blocking rate |
|---|---|---|---|---|---|---|---|
| | | | (80mmHg) | L/min | MmH2O | % | % |
| Mask according | 4 layers | Nacl | Impermeable | 32.0 | 15.7 | 0.16 | 99.84 |
| to present | | 0.076µm | Impermeable | 32.0 | 15.0 | 0.18 | 99.82 |
| invention | | | Impermeable | 32.0 | 15.8 | 0.14 | 99.86 |
| | | | Impermeable | 32.0 | 15.2 | 0.16 | 99.84 |

Accordingly, people working in a medical field can use the multilayered mask of the present invention for preventing them from inhaling of germs and the infection of AIDS attributed to the scattering of blood, body fluid or the like from an affected part of a patient at the time of surgery or at the time of treating the inside of the mouth of the patient. Further, the multilayered mask of the present invention can exhibit high advantageous effects in such applications.

### Brief Explanation of the Drawings

[Fig. 1]
   A perspective view of a multilayered mask according to an embodiment of the present invention.
[Fig. 2]
   A front view of the multilayered mask according to the embodiment of the present invention.
[Fig. 3]
   A back view of the multilayered mask according to the embodiment of the present invention.
[Fig. 4]
   A plan view of the multilayered mask according to the embodiment of the present invention.
[Fig. 5]
   A bottom view of the multilayered mask according to the embodiment of the present invention.
[Fig. 6]
   A right side view of the multilayered mask according to the embodiment of the present invention.
[Fig. 7]
   A cross-sectional view of the multilayered mask according to the embodiment of the present invention and an enlarged explanatory view of a part of the multilayered mask.
[Fig. 8]
   An explanatory view showing a use state of the multilayered mask according to the embodiment of the present invention.

### Explanation of Symbols

1: first mask sheet
2: second mask sheet
3: third mask sheet
4: fourth mask sheet
5: metal foil
6: cushion member
7: first stacked sheet body
8: second stacked sheet body
10: mask body
11: string
12: proximal portion
13: opening portion
14: insertion space portion
15: distal end portion
16: side periphery
18: axis of symmetry
19: upper string
20: lower string
H: user
N: nose

### Industrial applicability

The multilayered mask of the present invention allows people to use the mask in a daily life or in a medical care site, and can prevent spreading of viruses or pathogenic fungi by aerial infection or droplet infection. Particularly, since the multilayered mask of the present invention exhibits the excellent blood non-permeability, when a doctor or a nurse wears the mask during a surgical operation or during the treatment of a mouth of a patient, it is possible to effectively prevent the doctor or the nurse from sucking pathogenic fungi or being infected with AIDS due to spreading of blood or body fluid from an affected part of a patient.

## Claims

1. A mul til aye red mask which is constituted by stacking a plurality of mask sheets, wherein
at least an outermost-layer of the multilayered mask is formed of PPSB (polypropylene-span-bond) nonwoven fabric,
the multilayered mask includes a mask body which is formed into a cup shape and has a tapered distal end, and a proximal portion of the mask body is opened to form a face contact portion capable of covering a mouth and a nose, and
a fixing string extends between both ends of the face contact portion.

2. A multilayered mask according to claim 1, wherein in the plurality of layers of mask sheets, an outermost-layer mask sheet and an innermost-layer mask sheet are formed of a PPSB (polypropylene-span-bond) nonwoven mask sheet, and an intermediate-layer mask sheet is formed of an MB (melt-blown) nonwoven mask sheet.

3. A multilayered mask according to claim 2, wherein the intermediate-layer mask sheet is formed of a plurality of MB nonwoven mask sheets having mesh sizes which are different from each other.

4. A multilayered mask according to any one of claims 1 to 3, wherein the mask body is formed in a cup shape by seaming or welding left and right side peripheries of two upper and lower approximately mountain-shaped sheets which are formed by folding back the mask body, a proximal portion of the cup shape formed of the fold-back approximately mountain-shaped sheets is opened to form the face contact portion, and the fixing string is fixed to left and right ends of the face contact portion.

5. A multilayered mask according to any one of claims 1 to 4, wherein a strip-like metal foil which is deformable in conformity with a shape that a user desires is mounted on any one of layers of the mask sheets.

6. A multilayered mask according to any one of claims 1 to 5, wherein a strip-like cushion member which comes into contact with a nose of a user is mounted on an inner surface of the innermost-layer mask sheet of the mask sheet.
